Europäisches Patentamt

European Patent Office

Office européen des brevets

(11) Publication number: **0 257 899 B1**

# EUROPEAN PATENT SPECIFICATION

(45) Date of publication of patent specification: **24.06.92**

(51) Int. Cl.⁵: **C22C 29/16**, B01J 3/06, B23P 15/28

(21) Application number: **87307055.1**

(22) Date of filing: **10.08.87**

(54) **Cubic boron nitride abrasive body.**

(30) Priority: **11.08.86 ZA 866007**

(43) Date of publication of application:
**02.03.88 Bulletin 88/09**

(45) Publication of the grant of the patent:
**24.06.92 Bulletin 92/26**

(84) Designated Contracting States:
**BE DE FR GB NL SE**

(56) References cited:
**EP-A- 0 024 757       EP-A- 0 137 711
FR-A- 2 285 206       FR-A- 2 451 802
US-A- 2 921 485       US-A- 2 947 617
US-A- 4 201 757       US-A- 4 311 490**

**WORLD PATENTS INDEX, accession no.
85-207302/34, Derwent Publications Ltd, London, GB; & JP-A-60 131 811 (SUMITOMO
ELEC. IND., K.K.) 13-07-1985**

(73) Proprietor: **DE BEERS INDUSTRIAL DIAMOND
DIVISION (PROPRIETARY) LIMITED
8th Floor 45 Main Street
Johannesburg Transvaal(ZA)**

(72) Inventor: **Phaal, Cornelius
Glade Cottage St. Anne's Glade
Bagshot Surrey, GU19 5EF(GB)**

(74) Representative: **Jones, Alan John et al
CARPMAELS & RANSFORD 43 Bloomsbury
Square
London, WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

## BACKGROUND OF THE INVENTION

This invention relates to a cubic boron nitride abrasive body.

Cubic boron nitride is an abrasive second only to diamond in hardness. It is produced by subjecting hexagonal boron nitride in the presence of a suitable catalyst to temperature and pressure conditions at which cubic boron nitride is crystallographically stable. With the technology currently available, small or fine cubic boron nitride particles of good quality can be produced without difficulty. However, difficulties are encountered in producing large cubic boron nitride crystals, i.e. crystals which are of good quality and sufficiently large, usually greater than 3mm, to enable them to be fixed to the end of a tool shank for turning and milling applications.

Cubic boron nitride particles are extensively used in grinding wheels. In grinding wheels, a mass of small cubic boron nitride particles are held in a suitable matrix, generally a resin matrix, in the working portion of the wheel.

Small cubic boron nitride particles are also used in the manufacture of cubic boron nitride abrasive compacts. Such compacts are manufactured under elevated temperature and pressure conditions and comprise at least 70 percent by volume cubic boron nitride particles bonded into a coherent, hard conglomerate.

EP-A-0 024 757 discloses a compact comprising one or more single crystal diamonds, having a largest dimension of at least 1mm, embedded in a polycrystalline matrix selected from diamond; cubic boron nitride; and silicon and silicon carbide bonded diamond, cubic boron nitride, or mixtures of diamond and cubic boron nitride, wherein the single crystal diamond(s) comprise(s) 10 to 90 volume percent of the compact.

## SUMMARY OF THE INVENTION

According to the invention, there is provided a method of producing a cubic boron nitride abrasive body including the steps of providing a mass of small cubic boron nitride crystals wherein the small particles have a size less than 60 $\mu$m (microns), dispersing a number of cubic boron nitride particles 1mm or larger in size through the mass of small particles, subjecting the mass to elevated temperature and pressure conditions suitable to form an abrasive compact, and sectioning the abrasive compact into a plurality of pieces, each of which has a cubic boron nitride crystal 1mm or larger in size which presents a cutting point or edge.

## DESCRIPTION OF THE DRAWINGS

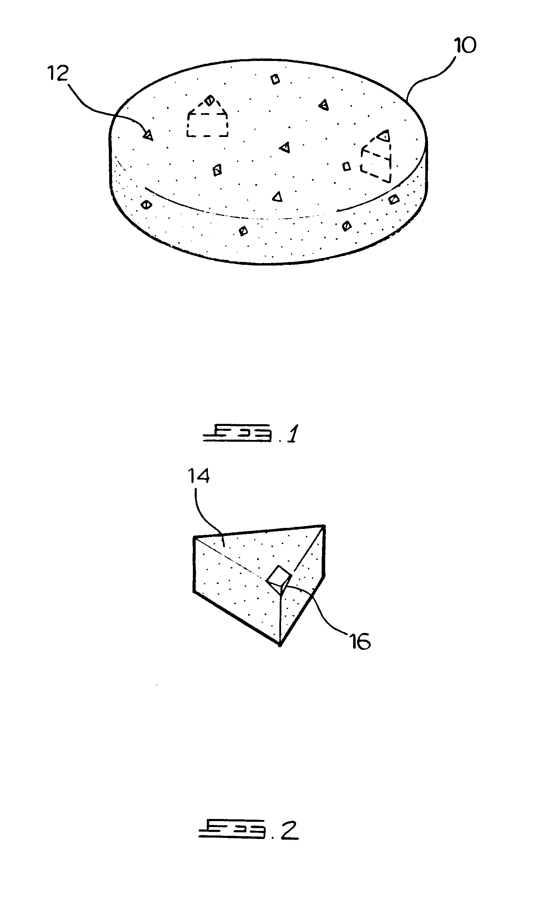

Figure 1 illustrates a disc-shaped cubic boron nitride abrasive body from which an abrasive body of the invention can be produced; and Figure 2 illustrates an example of an abrasive body of the invention.

## DETAILED DESCRIPTION OF THE INVENTION

The cubic boron nitride abrasive body of the invention presents a cutting point or edge which is provided by a relatively large cubic boron nitride particle. The abrasive body is thus able to act as a single crystal tool enabling it to be used to produce fine finishes on work pieces.

The cubic boron nitride compact, save for the presence of the large crystal, may be any known in the art. Preferably it will be a compact which has a second phase consisting essentially of aluminium nitride and/or diboride as described in British Patent No. 2048927.

The abrasive bodies of the invention are preferably manufactured by mixing fine cubic boron nitride particles, i.e. particles having a size of less than 60 $\mu$m (microns), with a number of large cubic boron nitride crystals, i.e. having a size of about 1mm or larger. The large crystals will be uniformly dispersed through the mixture.

A layer of aluminium is placed on the mixture which is then loaded into the reaction capsule of a conventional high temperature/high pressure apparatus. The capsule is placed in the apparatus and the contents of the capsule subjected to elevated temperature and pressure conditions suitable for compact manufacture. The elevated temperature is typically in the range 1400 to 1600°C, the elevated pressure is typically in the range 5 to 7 Gpa (50 to 70 kilobars) and these elevated conditions are typically maintained for a period of 10 to 30 minutes. Recovered from the reaction capsule is a cubic boron nitride compact of disc shape having uniformly dispersed therethrough a number of the large crystals. Any flaws in these crystals will have been annealed out during the compact manufacture.

The abrasive bodies are then produced by sectioning the compact into a plurality of pieces each of which presents a cutting point or edge provided by a large crystal. Sectioning of the compact may take place by methods known in the art such as spark erosion or laser cutting. The pieces may have any of a variety of shapes such as triangular, cube, hexagonal, pentagonal, and the like. Each such piece is capable of acting as a single crystal cubic boron nitride tool insert and may be used in the fine finishing of a work piece, typically a steel work piece. Each piece has the further advantage that the large crystal, which may be suitably oriented to optimise its cutting life, is held in a matching, i.e. cubic boron nitride, matrix.

Referring to the drawings, Figure 1 illustrates a disc-shaped cubic boron nitride compact 10 produced by the method described above and having uniformly dispersed therethrough a number of large crystals 12. The disc-shaped compact may be sectioned into a plurality of pieces, two of which are illustrated by the dotted lines. Figure 2 illustrates one such piece 14 which is of triangular shape and has a large crystal 16 at the apex of the triangle. This large crystal provides the cutting point for the body.

## Claims

1. A method of producing a cubic boron nitride abrasive body including the steps of providing a mass of small cubic boron nitride crystals wherein the small particles have a size less than 60 $\mu$m (microns), dispersing a number of cubic boron nitride particles 1mm or larger in size through the mass of small particles, subjecting the mass to elevated temperature and pressure conditions suitable to form an abrasive compact, and sectioning the abrasive compact into a plurality of pieces, each of which has a cubic boron nitride crystal 1mm or larger in size which presents a cutting point or edge.

2. A method according to claim 1 wherein the elevated temperature is in the range 1400°C to 1600°C, the elevated pressure is in the range 5 to 7 Gpa (50 to 70 kilobars) and the elevated conditions are maintained for a period of 10 to 30 minutes.

## Revendications

1. Procédé pour la production d'un corps abrasif en nitrure de bore cubique comprenant les étapes consistant à fournir une masse de petits cristaux en nitrure de bore cubique dans lesquels les petites particules ont une granulométrie inférieure à 60 $\mu$m, à disperser un certain nombre de particules de nitrure de bore cubique de 1 mm ou d'une granulométrie supérieure dans toute la masse des petites particules, à soumettre la masse à des conditions de température et de pression élevées permettant de former un corps compact abrasif et à sectionner le corps compact abrasif en plusieurs morceaux dont chacun comporte un cristal en nitrure de bore cubique d'une granulométrie de 1 mm ou supérieure et qui présente une pointe ou bord de coupe.

2. Procédé selon la revendication 1, dans lequel la température élevée se situe dans la plage de 1 400°C à 1 600°C, la pression élevée se situe dans la plage de 5 à 7 Gpa (50 à 70 kilobars) et les conditions élevées sont maintenues pendant une durée de 10 à 30 minutes.

## Patentansprüche

1. Verfahren zur Herstellung eines Schleifmittel-Körpers aus kubischem Bornitrid, umfassend die Schritte des Bereitstellens einer Masse kleiner kubischer Bornitrid-Kristalle, worin die kleinen Teilchen eine Größe von weniger als 60 $\mu$m (Mikrometer) haben, des Dispergierens einer Anzahl kubischer Bornitrid-Teilchen mit einer Größe von 1 mm oder darüber in der Masse der kleinen Teilchen, das Einwirkenlassen von Bedingungen erhöhter Temperatur und erhöhten Drucks, die geeignet sind, einen Schleifmittel-Compact zu bilden, auf die Masse und das Zerschneiden des Schleifmittel-Compacts in mehrere Stücke, von denen jedes einen kubischen Bornitrid-Kristall mit einer Größe von 1 mm oder darüber besitzt, der einen Schneidepunkt oder eine Schneidekante darbietet,

2. Verfahren nach Anspruch 1, worin die erhöhte Temperatur im Bereich von 1400 °C bis 1600 °C liegt, der erhöhte Druck im Bereich von 5 bis 7 GPa (50 bis 70 kbar) liegt und die erhöhten Bedingungen eine Zeitspanne von 10 bis 30 min aufrechterhalten werden.

12

10

_Fig._ .1

14

16

_Fig_ .2